# EUROPÄISCHE PATENTSCHRIFT

(11) **EP 0 845 401 B1**
(45) Veröffentlichungstag und Bekanntmachung des Hinweises auf die Patenterteilung: **10.10.2001**
(21) Anmeldenummer: 97120172.8
(22) Anmeldetag: 18.11.1997
(51) Int. Cl.: B62B 3/18

(54) **Stapelbarer Einkaufswagen**
Nestable shopping trolley
Chariot d'achat emboîtable.

(30) Priorität: 29.11.1996 DE 29620722 U
(43) Veröffentlichungstag der Anmeldung: 03.06.1998
(73) Patentinhaber: WANZL METALLWARENFABRIK GMBH, D-89336 Leipheim (DE)
(72) Erfinder: Ertle, Karl, 89129 Langenau (DE)

(56) Entgegenhaltungen:
- DE-A- 3 235 803
- US-A- 4 544 171

## Beschreibung

Die Erfindung betrifft einen stapelbaren Einkaufswagen mit einem Fahrgestell, das einen sich in Schieberichtung verjüngenden Korb trägt, der Längs- und Querdrähte aufweist und der mit Hilfe von Stützmitteln am Fahrgestell befestigt ist, wobei die durch eine Öffnung gebildete Rückseite des Korbes durch eine Klappe verschließbar ist, die sich um horizontale Achse nach oben in das Korbinnere verschwenken läßt und wobei die Klappe in ihrer die Öffnung verschließenden Ausgangslage an Anschlagteilen anliegt, die am unteren Rand der Öffnung des Korbes vorgesehen sind.

Stapelbare Einkaufswagen weisen bekanntlich zum Stapeln eine um eine horizontale Achse nach oben verschwenkbare Klappe auf, die beim Entstapeln zweier Einkaufswagen herunterfällt und die Rückwand des Warenkorbes bildet. Zur Geräuschdämpfung beim Stapel- und Entstapelvorgang sind bei den von der Anmelderin in den Handel gebrachten Einkaufswagen am unteren Rand des Korbes Anschlagteile aus elastischem Material angeordnet Beim Stapeln von Einkaufswagen schlagen gewöhnlich die den Korb tragenden Stützmittel des einzuschiebenden Wagens an den unteren hinteren Rand des Korbes des vorausbefindlichen Einkaufswagens an. Da die Anschlagteile aber sehr schmal sind, treffen die Stützmittel häufig neben den Anschlagteilen auf und hinterlassen Beschädigungen am unteren Rand des Korbes. Dies ist besonders bei Einkaufswagen von Nachteil, die kunststoffbeschichtet sind. Die Kunststoffschichten besitzen nicht die Härte und Stoßfestigkeit von zum Beispiel Chrom- oder Zinkschichten. Platzt die Kunststoffschicht ab, ist der freigelegte Draht Luft und Nässe ausgesetzt und beginnt zu rosten. Dies verkürzt die Lebensdauer eines Einkaufswagens.

Die Aufgabe der Erfindung besteht darin, bei einem Einkaufswagen der eingangs genannten Art die Anschlagteile so weiterzuentwickeln, dass die oben erwähnten Nachteile vermieden werden.

Die Aufgabe wird dadurch gelöst, dass jedes Anschlagteil länger ist als der Abstand zweier unmittelbar benachbarter Längsdrähte, und dass die Anschlagteile Anschlagflächen für die Stützmittel eines Einkaufswagens bilden, wenn dieser in einen vorausbefindlichen Einkaufswagen eingeschoben wird.

Jedes Anschlagteil deckt einen größeren Bereich des unteren Randes als bisher ab und verhindert somit in vorteilhafter Weise, dass beim Stapeln von Einkaufswagen beispielsweise scharfe Kanten eines Stützmittels eines eingeschobenen Einkaufswagens direkt auf den unteren Rand des Korbes eines vorderen Einkaufswagens treffen. Die Anschlagteile sind so bereit, dass jedes Stützmittel eines hinteren Einkaufswagens auf ein Anschlagteil auftrifft. So können die Anschlagteile, ohne dass enge Maßtoleranzen zu beachten wären, montiert werden. Die erfolgte Vergrößerung der Anschlagteile bewirkt auch größere Aufschlagflächen für die Klappen, was zu einer Geräuschminderung beiträgt.

Die Erfindung wird anhand von Ausführungsbeispielen näher erläutert. Es zeigt
- Fig. 1: einen stapelbaren Einkaufswagen mit zwei Anschlagteilen;
- Fig. 2: ein Anschlagteil:
- Fig. 3: ein auf den unteren Rand der Öffnung aufgesetztes Anschlagteil sowie
- Fig. 4: die in Fig. 3 gezeigte Anordnung in Seitenansicht

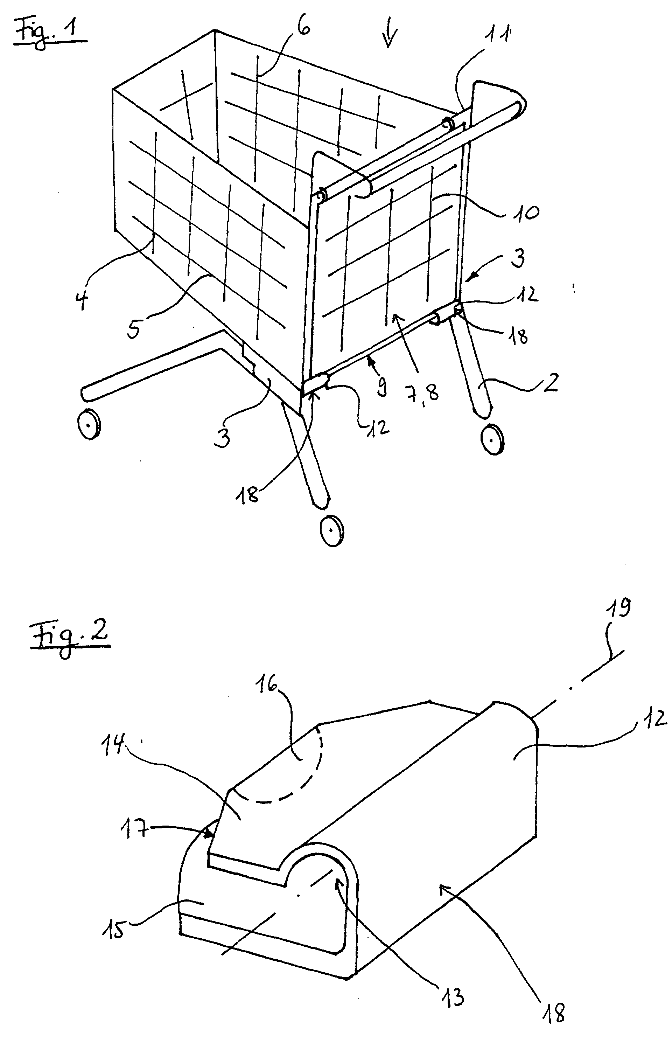

Fig. 1 zeigt einen stapelbaren Einkaufswagen 1, der ein Fahrgestell 2 aufweist, das einen in Schieberichtung sich verjüngenden Korb 4 trägt, der Längs- und Querdrähte 5, 6 aufweist und der mittels zweier Stützmittel 3 am Fahrgestell 2 befestigt ist. Die in bekannter Weise durch eine Öffnung 8 gebildete Rückseite 7 des Korbes 4 ist durch die Klappe 10 verschließbar, die sich um eine horizontale Achse 11 nach oben in das Korbinnere verschwenken lässt. Am unteren Rand 9 der Öffnung 8 des Korbes 4 sind beidseitig je ein Anschlagteil 12 angeordnet, die Anschlagflächen für die Klappe 10 bilden. Fällt die Klappe 10 beim Entstapeln von Einkaufswagen 1 nach unten, um die Rückwand des Korbes 4 zu bilden, so schlägt sie nur an den aus geräuschdämpfendem und elastischem Kunststoff gebildeten Anschlagteilen 12 an. Die Anschlagteile 12 sind am unteren Rand 9 so angeordnet, dass ihre Rückseiten 18 Anschlagflächen für die Stützmittel 3 eines rückwärtigen Einkaufswagens 1 bilden, wenn dieser in einen vorausbefindlichen Einkaufswagen 1 eingeschoben wird.

Fig. 2 zeigt ein Anschlagteil 12. Es weist einen auf einer Längsachse 19 angeordneten Abschnitt 13 auf, an dem zwei parallele Ebenen 14, 15 angeformt sind. Die Ebenen 14, 15 sind in einem Abstand zueinander angeordnet und bilden somit einen Schlitz 17. An der Unterseite der oberen Ebene 14 ist ein Vorsprung 16 vorgesehen, der zur unteren Ebene 15 gerichtet ist, diese aber nicht erreicht. Das Anschlagteil 12 läßt sich über den Schlitz 17 elastisch aufweiten.

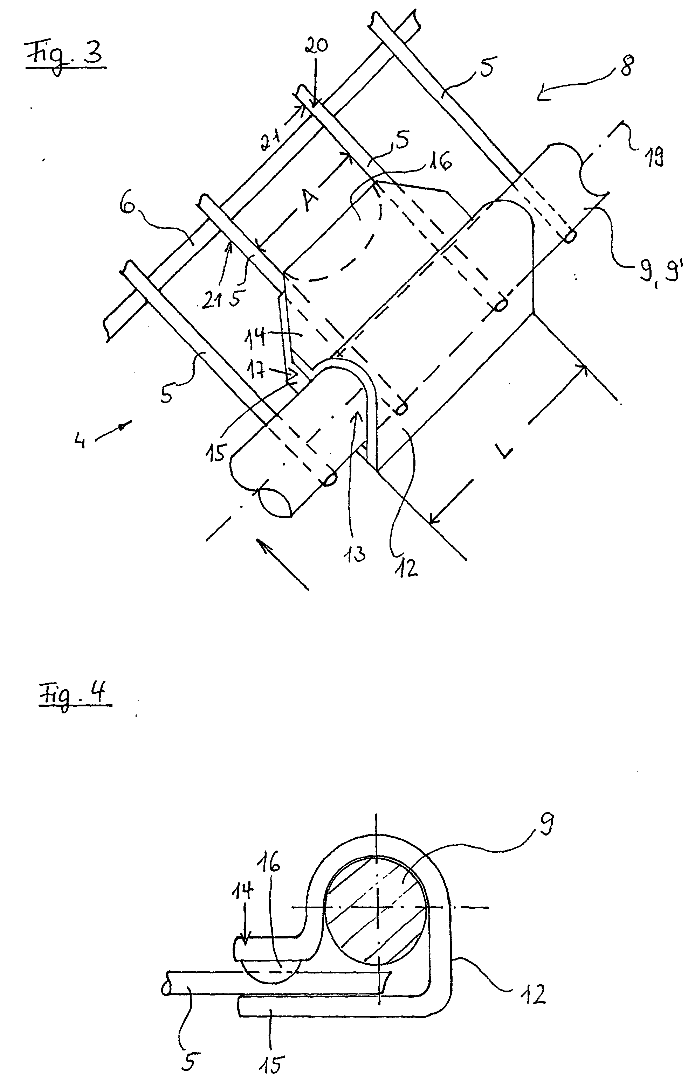

Fig. 3 zeigt ein auf den unteren Rand 9 der Öffnung 8 des Korbes 4 aufgesetztes Anschlagteil 12. Der untere Rand 9 ist im Beispiel aus einem Quersteg 9' mit zylindrischem Querschnitt gebildet. In der Zeichnung sind ferner Längs- und Querdrähte 5, 6 eingezeichnet, die zur Herstellung des Korbes 4 erforderlich sind. Durch Aufweiten des Schlitzes 17 läßt sich das Anschlagteil 12 in Pfeilrichtung mit seinem hohlen Abschnitt 13 auf den unteren Rand 9 aufsetzen. Anschließend schnappen die Ebenen 14, 15 wieder zurück in ihre Ausgangslage, so daß das Anschlagteil 12 lösbar am unteren Rand 9 befestigt ist. In dieser Lage befindet sich der Vorsprung 16 zwischen zwei Längsdrähten 5. Die beiden unmittelbar benachbarten Längsdrähte 5 bilden seitliche Anschläge für den Vorsprung 16. Auf diese Weise ist das Anschlagteil 12 gegen Verschieben entlang des unteren Randes 9 bzw. entlang der Längsachse 19 gesichert. Damit sich das Anschlagteil 12 nicht um die Längsachse 19 drehen läßt, sind die Ebenen 14, 15 so plaziert und ihr Abstand so gewählt, daß die obere Ebene 14 auf der Oberseite 20 der Längsdrähte 5 und die untere Ebene 15 an der Unterseite 21 der Längsdrähte 5 zumindest dann anliegen, wenn versucht wird, das Anschlagteil 12 um die Längsachse 19 zu verdrehen, vgl. auch Fig. 4. Die Ebenen 14, 15 bilden somit umgekehrt auch Anschlagflächen für die Längsdrähte 5.Aus der Zeichnung geht hervor, daß die Länge L des Anschlagteiles 12 größer ist als der Abstand A zweier unmittelbar benachbarter Längsdrähte 5.

Fig. 4 zeigt ergänzend in Seitenansicht die in Fig. 3 beschriebene Anordnung. Man erkennt den aus einem Rundraht gefertigten unteren Rand 9, ferner die Längsdrähte 5, die am unteren Rand 9 enden, das auf den unteren Rand 9 und die Längsdrähte 5 aufgesetzte Anschlagteil 12, die Ebenen. 14, 15 sowie den Vorsprung 16, der zwischen zwei Längsdrähten 5 angeordnet ist.

## Patentansprüche

1. Stapelbarer Einkaufswagen (1) mit einem Fahrgestell (2), das einen sich in Schieberichtung verjüngenden Korb (4) trägt, der Längs- und Querdrähte (5, 6) aufweist und der mit Hilfe von Stützmitteln (3) am Fahrgestell (2) befestigt ist, wobei die durch eine Öffnung (8) gebildete Rückseite (7) des Korbes (4) durch eine Klappe (10) verschließbar ist, die sich um eine horizontale Achse (11) nach oben in das Korbinnere verschwenken lässt und wobei die Klappe (10) in ihrer die Öffnung (8) verschlieβenden Ausgangslage an Anschlagteilen (12) anliegt, die am unteren Rand (9) der Öffnung (8) des Korbes (4) vorgesehen sind, **dadurch gekennzeichnet, dass** jedes Anschlagteil (12) länger ist als der Abstand zweier unmittelbar benachbarter Längsdrähte (5) und dass die Anschlagteile (12) Anschlagflächen für die Stützmittel (3) eines Einkaufswagens (1) bilden, wenn dieser in einen vorausbefindlichen Einkaufswagen (1) eingeschoben wird.

2. Stapelbarer Einkaufswagen nach Anspruch 1, **dadurch gekennzeichnet, dass** das Anschlagteil (12) zwei Ebenen (14, 15) aufweist, die zur Anlage an zwei Längsdrähte (5) des Korbes (4) bestimmt sind.

3. Stapelbarer Einkaufswagen nach Anspruch 1 oder 2, **dadurch gekennzeichnet, dass** die Ebenen (14, 15) in einem Abstand zueinander angeordnet sind und einen Schlitz (17) bilden, der zum Aufweiten des Anschlagteiles (12) bestimmt ist.

4. Stapelbarer Einkaufswagen nach einem der Ansprüche 1 bis 4, **dadurch gekennzeichnet, dass** zwischen den Ebenen (14, 15) ein Vorsprung (16) angeordnet ist, der zum Eingreifen zwischen zwei Längsdrähte (5) vorgesehen ist

5. Stapelbarer Einkaufswagen nach einem der Ansprüche 1 bis 5, **dadurch gekennzeichnet, dass** das Anschlagteil (12) einen hohlen Abschnitt (13) aufweist, der zur Aufnahme eines Teils des unteren Randes (9) bestimmt ist.

## Claims

1. A stackable shopping trolley (1) having a wheel frame (2) which bears a basket (4) which tapers in the pushing direction, has longitudinal and transverse wires (5, 6) and is secured to the wheel frame (2) by supporting means (3), wherein the basket rear (7) formed by an opening (8) is closeable by a flap (10) pivotable upwards about a horizontal axis (11) into the basket interior, and wherein the flap (10) contacts stop parts (12) when in its initial position in which it closes the opening (8), these stop parts (12) being provided at the lower edge (9) of the opening (8) of the basket (4), **characterised in that** each stop part (12) is longer than the distance between two directly adjacent longitudinal wires (5), and **in that** the stop parts (12) form stop faces for the supporting means (3) of a shopping trolley (1) when the latter is pushed into a preceding shopping trolley (1).

2. A stackable shopping trolley according to Claim 1, **characterised in that** the stop part (12) has two plane surfaces (14, 15) intended to contact two longitudinal wires (5) of the basket (4).

3. A stackable shopping trolley according to Claim 1 or 2, **characterised in that** the plane surfaces (14, 15) are arranged at a distance from one another and form a slot (17) intended to expand the stop part (12).

4. A stackable shopping trolley according to any one of Claims 1 to 4, **characterised in that** a projection (16) is arranged between the plane surfaces (14, 15) and is provided for engaging between two longitudinal wires (5).

5. A stackable shopping trolley according to any one of Claims 1 to 5, **characterised in that** the stop part (12) has a hollow portion (13) intended to receive part of the lower edge (9).

## Revendications

1. Chariot de marchandises (1) encastrable comprenant un dispositif de roulement (2) portant un panier (4) se rétrécissant dans le sens de déplacement, qui présente des tiges métalliques longitudinales et transversales (5, 6) et qui est fixé à l'aide de moyens de support (3) au dispositif de roulement (2), sachant que le côté arrière (7) du panier (4) formé par une ouverture (8) peut être fermé par une trappe (10) pouvant pivoter autour d'un axe horizontal (11) vers le haut, à l'intérieur du panier, et sachant que la trappe (10) est appliquée, dans sa position initiale dans laquelle elle ferme l'ouverture (8), contre des éléments de butée (12) qui sont prévus sur le bord inférieur (9) de l'ouverture (8) du panier (4), **caractérisé en ce que** chaque élément de butée (12) est plus long que l'écart entre deux tiges métalliques longitudinales (5) directement adjacentes, et **en ce que** les éléments de butée (12) constituent des surfaces de butée pour les moyens de support (3) d'un chariot de marchandises (1) lorsqu'on encastre celui-ci dans un chariot de marchandises (1) qui le précède.

2. Chariot de marchandises encastrable selon la revendication 1, **caractérisé en ce que** l'élément de butée (12) présente deux plans (14, 15) qui sont destinés à venir s'appliquer contre deux tiges métalliques longitudinales (5) du panier (4).

3. Chariot de marchandises encastrable selon la revendication 1 ou 2, **caractérisé en ce que** les plans (14, 15) sont espacés l'un de l'autre et forment une fente (17) servant à élargir l'élément de butée (12).

4. Chariot de marchandises encastrable selon l'une des revendications 1 à 4, **caractérisé en ce qu'**entre les plans (14, 15) est placée une saillie (16) qui est prévue pour venir s'encastrer entre deux tiges métalliques longitudinales (5).

5. Chariot de marchandises encastrable selon l'une des revendications 1 à 5, **caractérisé en ce que** l'élément de butée (12) présente un segment creux (13) qui est destiné à recevoir une partie du bord inférieur (9).
